# EUROPÄISCHE PATENTSCHRIFT

(11) **EP 2 230 212 B1**
(45) Veröffentlichungstag und Bekanntmachung des Hinweises auf die Patenterteilung: **22.10.2014**
(21) Anmeldenummer: 10155590.2
(22) Anmeldetag: 05.03.2010
(51) Int. Cl.: C02F 3/04, C02F 3/10, C02F 3/28, C02F 3/30, C02F 1/00, C02F 101/16, C02F 101/10, C02F 9/00

(54) **Verfahren zum Betrieb einer Kläranlage zur Reinigung von Abwasser sowie Kläranlage**
Method for operating a waste water treatment plant for cleaning waste water and waste water treatment plant
Procédé de fonctionnement d'une station d'épuration destinée au nettoyage des eaux usées, ainsi que station d'épuration

(30) Priorität: 10.03.2009 DE 102009001431
(43) Veröffentlichungstag der Anmeldung: 22.09.2010
(73) Patentinhaber: Forschungsinstitut für Wasser- und Abfallwirtschaft an der RWTH Aachen e.V., 52074 Aachen (DE)
(72) Erfinder: Riße, Henry, 52080, Aachen (DE)
(74) Vertreter: Bauer, Dirk

(56) Entgegenhaltungen:
- EP-A2- 0 247 212
- WO-A1-99/23038
- DE-A1- 3 305 801
- DE-A1- 19 723 008
- JP-A- 2001 347 291
- JP-A- 2003 094 082
- JP-A- 2004 141 719
- JP-A- 2005 021 831
- US-A1- 2004 149 651
- DATABASE WPI Week 199934 Thomson Scientific, London, GB; AN 1999-398745 XP002614199, & JP 11 156387 A (NISHIHARA KANKYO EISEI KENKYUSHO KK) 15. Juni 1999 (1999-06-15) -& JP 11 156387 A (NISHIHARA KANKYO EISEI KENKYUSHO KK) 15. Juni 1999 (1999-06-15)

## Beschreibung

### Einleitung

Die Erfindung betrifft ein Verfahren zum Betrieb einer Kläranlage zur Reinigung von Abwasser gemäß Anspruch 1.

Des Weiteren betrifft die Erfindung eine Kläranlage zur Reinigung von Abwasser gemäß Anspruch 6.

### Stand der Technik

Ein Verfahren unter Nutzung von Tropfkörpern zur Stickstoffelimination sowie eine solchermaßen betriebene Kläranlage ist bekannt aus der EP 1 030 821 B 1 sowie dem diesbezüglichen Zeitschriftenartikel "Ertüchtigung der Kläranlage Oberaudorf, Stickstoffelimination mit dem SDN®-Verfahren" von Dr. Franz Xaver Müller, erschienen in Heft 3, 2004, Seiten 24 bis 27, der Zeitschrift WWT. Die vorbekannte Verfahrensweise stellt eine Form der vorgeschalteten Denitrifikation dar. Das Vorklärbecken erhält dabei eine Doppelfunktion und zwar zum einen als Denitrifikationsbiologie und zum anderen als Vorklärung. Die Rückführung von nitrathaltigem Wasser erfolgt gemäß dem vorbekannten Verfahren in den Zulauf der Vorklärung. Das nitrathaltige Abwasser wird dabei aus dem Ablauf der Nachklärung bzw. aus dem Ablauf der Tropfkörper, in denen die Nitrifizierung stattfindet, entnommen und nach dem Sandfang in das Zulaufgerinne zur Vorklärung oder in den vorderen Bereich des Vorklärbeckens geleitet. Die Rückführmenge wird mittels einer Steuerung an die Abwasserzulaufmenge angepasst. Die variable Rückführung von Kreislaufwasser nutzt somit die ursprünglich für den Regenwetterfall vorgesehene hydraulische Reserve der Anlage aus. Bei starken und länger anhaltenden Regenereignissen wird der Verdünnungseffekt, der sich aus den geringen Zulaufkonzentrationen im Hinblick auf den Parameter Stickstoff ergibt, mitgenutzt.

Zum Aufbau einer Denitrifikationsbiologie der Vorklärung wird der Überschussschlamm aus der Zwischen- bzw. Nachklärung in die Vorklärung geleitet. Der Schlammspiegel des Rohschlamm-Überschussschlamm-Gemischs in der Vorklärung wird dabei gezielt höher eingestellt, als bei reinem Vorklärbeckenbetrieb. Dadurch wird ein für das Bakterienwachstum notwendiges Schlammalter im Vorklärbecken erreicht. Denitrifikanten können sich nun im Schlamm anreichern.

Mit Hilfe einer kontinuierlichen Räumbewegung wird eine zu starke Sedimentation des Schlammgemischs im Vorklärbecken vermieden. Zusätzlich wird der Mischschlamm aus den Sammeltrichtern des Beckens entnommen und wieder in den Zulauf der Vorklärung gepumpt. Auf diese wird ein interner Schlammkreislauf hergestellt und eine gute Durchmischung des Schlamms mit dem nitrathaltigen Wasser und dem kohlenstoffreichen Rohabwasser sichergestellt. Hauptziel dieser Durchmischung ist der Kontakt zwischen Bakterien und den zu verarbeitenden Substraten Nitratsauerstoff und Kohlenstoffverbindungen.

Dadurch dass die Denitrifikationsbiologie sich im Vorklärbecken befindet, wird das Kohlenstoffangebot im Rohabwasser optimal ausgenutzt. Dies bedeutet, dass dem denitrifizierenden Organismen der gesamte Kohlenstoff des zulaufenden Abwassers, d.h. sowohl gelöste, als auch partikuläre abbaubare Stoffe zur Verfügung stehen.

Eine alternative Verfahrensweise ist aus der Veröffentlichung "Anwendung der Denitrifikation nach Tropfkörpern auf der KA Arnsberg" von Norbert Jardin und Klaus Kraus (Ruhrverband) auf dem Innovationsworkshop 14.02.2006 bekannt. Die Denitrifikationsstufe ist dabei als Wirbelbett- Denitrifikation der Nitrifikationsstufe nachgeschaltet. Die Wirbelbett- Denitrifikationsstufe ist mit fluidisierbaren AufwuchsAufwuchsträgerkörpern aus einem Kunststoffmaterial befüllt, auf deren großer Oberfläche sich ein Besatz von Denitrifikanten bildet. In der Wirbelbett-Denitrifikation werden langsam laufende Verteilrührwerke mit Frequenzumrichtern anstelle von schnelllaufenden Horizontalrührwerken verwendet. Hierdurch kann der Energiebedarf für den Betrieb der Denitrifikationsstufe gering gehalten werden und gleichwohl eine gute Denitrifikationsleistung erzielt werden.

Da der Auslauf der der Denitrifikationsstufe vorgeschalteten Nitrifikationsstufe eine hohe Sauerstoffsättigung und einen bereits stark reduzierten Kohlenstoffgehalt besitzt, ist bei der nachgeschalteten Wirbelbettdenitrifikation die Zufuhr zusätzlichen kohlenstoffhaltigen Materials in die Denitrifikationsstufe erforderlich, um den Sauerstoffgehalt im Abwasser zu senken und die anschließend anoxisch ablaufende Denitrifikation (Nitratatmung) überhaupt starten zu können. Die als externe Kohlenstoffquelle genutzten Materialien (z.B. Brauereiabfälle, Methanol) stellen jedoch hochwertige Rohstoffe dar, die in heutiger Zeit vorzugsweise zur effizienten Energieerzeugung in Biogasanlagen genutzt werden könnten. Die Beschaffung kohlenstoffhaltigen Zusatzmaterials für die Denitrifikation stellt somit bei diesem bekannten Verfahren einen nicht unbeträchtlichen Kostenfaktor dar.

Eine andere Verfahrensweise ist aus der JP 11 156387 A1 bekannt. Sie beschreibt eine Kläranlage und ein Verfahren zur biologischen Reinigung von Abwasser von stickstoffhaltigen Verunreinigungen, bei dem das zu reinigende Wasser in einer ersten Stufe mit Hilfe von denitrifizierenden Mikroorganismen einer Denitrifikation und in einer zweiten Stufe mit Hilfe von nitrifizierenden Mikroorganismen einer Nitrifikation unterworfen wird, wobei die Mikroorganismen beider Stufen auf einem Trägermaterial gehalten werden, wobei ferner ein Teil des behandelten Abwassers nach der Nitrifikation in die Denitrifikationsstufe zurückgeführt wird.

Ferner beschreibt die JP 11 156387 A1 dass ein Rezirkulazionsstrom in einer sauerstoffzehrenden Stufe behandelt wird, wobei der Rezirkulationsstrom aus dem Boden des Nachklärbeckens entnommen wird.

### Aufgabe

Vor diesem Hintergrund liegt der Erfindung die Aufgabe zugrunde, ein Verfahren zum Betrieb einer Kläranlage sowie auch eine Kläranlage selbst vorzuschlagen, bei dem bzw. der sich auf energieeffiziente Weise und ohne Verwendung einer zusätzlichen Kohlenstoffquelle in der Denitrifikationsstufe geringe Gesamtstickstoffgehalte im Abwasser erzielen lassen.

### Lösung

Ausgehend von einem Verfahren der eingangs beschriebenen Art wird die vorgenannte Aufgabe dadurch gelöst, dass die Denitrifikation in der Denitrifikationsstufe mittels im Abwasser fluidisierbaren und mit Biomasse besetzten Aufwuchsträgermaterials gemäß Anspruch 1 erfolgt.

Die erfindungsgemäße Lösung zeichnet sich somit dadurch aus, dass sie vom Prinzip einer der Nitrifikationsstufe vorgeschalteten Denitrifikationsstufe ausgeht. Der Kohlenstoffgehalt des Abwassers in der Denitrifikationsstufe ist somit hoch, weshalb auf die Zuführung externen Kohlenstoffs aus einer sonstigen Quelle bei dem Verfahren nach der Erfindung gänzlich verzichtet werden kann. Darüber hinaus zeichnet sich das erfindungsgemäße Verfahren aber auch durch eine sehr gute Energieeffizienz aus, da zum einen die Nitrifikation im Tropfkörper bzw. einem anderen natürlich belüfteten System erfolgt, das i.d.R. durch Naturzug belüftet wird, und zum anderen die Denitrifikation unter Nutzung auf fluidisierten Aufwuchsträgermaterial fixierter Biomasse erfolgt, wodurch sich eine Schlammrückhaltung bzw. Biomasseentfernung nach dem Auslauf aus der Denitrifikationsstufe erübrigt; vielmehr wird der Überschussschlamm aus der Denitrifikation einfach durchgespült und der Nitrifikationsstufe zugeführt. Aufgrund seiner geringen Konzentration und seiner eher "stückigen" Konsistenz ist dies für die Nitrifikationsstufe, auch wenn diese, was zu bevorzugen ist, als Tropfkörper ausgeführt ist - nicht schadet, solange der Tropfkörper hinreichend große freie Strömungsquerschnitte aufweist und mit einem ausreichenden Abwasser-Volumenstrom durchgespült wird. Bei der erfindungsgemäßen Verfahrensweise kann somit auf typischerweise großdimensionierte Zwischenklärbecken zwischen der Denitrifikationsstufe - sofern diese als Belebtschlammstufe ausgeführt ist - und der Nitrifikationsstufe verzichtet werden.

Demgegenüber zeichnet sich das aus der EP 1 030 821 B 1 bekannte Verfahren dadurch aus, dass das Vorklärbecken als Belebtschlamm-Denitrifikationsstufe eine sehr hohe Biomassekonzentration aufweist, die für die Effizienz der Denitrifikation vorteilhaft ist. Als Nachteil tritt hierbei jedoch in Erscheinung, dass aus der Denitrifikationsstufe ein sehr hoher Biomasseaustrag stattfindet. Ein solcher Biomasseaustrag macht die direkte Einleitung des aus der Denitrifikationsstufe kommenden Abwasserstroms in eine als Tropfkörper ausgeführte Nitrifikationsstufe ungeeignet, sondern erfordert vielmehr die Zwischenschaltung eines großdimensionierten und entsprechend teuren Zwischenklärbeckens.

Erfindungsgemäß sind somit beide Teilschritte bei der Stickstoffelimination, nämlich zum einen die Nitrifikation und zum anderen die Denitrifikation mit Hilfe von trägerfixierter Biomasse möglich, wobei die energetisch günstigste Nitrifikation in einem Tropfkörper oder einem anderen natürlich belüfteten System erfolgt. Der extrem niedrige Energiebedarf, der signifikant unter dem des alternativen Belebtschlammverfahrens zur Nitrifikation/Denitrifikation liegt, kann rechnerisch aus der Verstromung des Biogases aus einer mesophilen Schlammfaulung des Vorklärschlammes einschließlich der geringen Überschussschlammmenge gedeckt werden, so dass mit dem erfindungsgemäßen Verfahren erstmals ein energieautarker Betrieb der gesamten Kläranlage ohne ständige Nutzung externer Energiequellen möglich wird. Gleichzeitig liegt die Überschussschlammproduktion deutlich unter der des Belebtschlamm-verfahrens, so dass das erfindungsgemäße Verfahren eine sehr wirtschaftliche Alternative sowohl zu konventionellen Belebtschlammverfahren als auch zu anderen Biofilmverfahren mit Zugabe von externem kohlenstoffhaltigem Material darstellt.

Gemäß einer bevorzugten Ausgestaltung des erfindungsgemäßen Verfahrens wird in der Denitrifikationsstufe eine Vielzahl von fluidisierten Aufwuchsträgerkörpern mit einer Dichte von ungefähr 1 kg/dm³ in dem Abwasser mittels mindestens einer Bewegungseinrichtung bewegt. Die Aufwuchsträgerkörper, die eine Größe (Durchmesser, Kantenlänge) von ca. 5 mm bis 20 mm besitzen können, weisen eine sehr große spezifische Oberfläche und somit eine große Kontaktfläche zwischen den die Oberfläche besiedelnden Bakterien und dem zu behandelnden Abwasser auf. Vorzugsweise mit Hilfe eines Ablaufsiebs wird verhindert, dass die fluidisierten Aufwuchsträgerkörper mit dem Ablaufstrom aus der Denitrifikationsstufe ausgetragen werden.

Da der rezirkulierte Strom, der aus der vorzugsweise als Tropfkörper ausgebildeten Nitrifikationsstufe stammt, einen hohen Sauerstoffgehalt aufweist, wird dieser Rezirkulationsstrom gemäß Anspruch 1 zunächst in eine sauerstoffzehrende Stufe geführt, bevor er mit stark reduziertem Sauerstoffgehalt in die Denitrifikationsstufe geleitet wird. Auf diese Weise wird erreicht, dass der Nitratstickstoff enthaltende Rezirkulationsstrom sogleich bei seinem Eintritt in die Denitrifikationsstufe zur Erzielung anoxischer Bedingungen beiträgt, so dass die Denitrifikation effizient durchgeführt werden kann.

Um eine möglichst große Kontaktfläche zwischen den die Sauerstoffzehrung durchführenden Bakterien und dem zu reduzierenden Abwasser zu erzielen, sollte die Sauerstoffzehrung mittels mindestens einer in der Sauerstoff zehrenden Stufe fluidisierten Aufwuchs-Trägermaterialfüllung der Dichte nahe 1 g/cm³ mit daran anhaftender Biomasse erfolgen. Die Sauerstoffzehrung erfolgt typischerweise mit Hilfe heterotropher aber auch autotropher Bakterien, die aus dem Tropfkörper eingespült werden und sich auf dem Trägermaterial ansiedeln. Die fluidisierbaren Aufwuchsträgerkörper im Reaktor können vorzugsweise mittels mindestens einer langsam laufenden Rührvorrichtung bewegt werden. Der Energieaufwand zur Durchmischung des zu reduzierenden Rezirkulationsstroms wird auf diese Weise gering gehalten.

Da der Kohlenstoffgehalt in dem Rezirkulationsstrom gegenüber dem Zulaufstrom des Abwassers deutlich reduziert ist, kann zur Beschleunigung der Sauerstoffzehrung in der sauerstoffreduzierenden Stufe der Zulaufstrom des Abwassers während eines begrenzten Zeitraums in den während der übrigen Zeit als sauerstoffzehrende Stufe dienenden Reaktor geleitet werden, von wo aus er der Nitrifikationsstufe zugeführt wird, wobei der Rezirkulationsstrom während dieses Zeitraums in den während der übrigen Zeit als Denitrifikationsstufe dienenden Reaktor geleitet und dort der mitgeführte Sauerstoff reduziert wird, von wo aus er dem ersten Reaktor zugeführt und dort denitrifiziert wird.

Durch eine derartige wechselweise Beaufschlagung zweier Reaktoren mit dem kohlenstoffhaltigen Rohabwasser wird eine hinreichende Kohlenstoffversorgung auch der Bakterien in der sauerstoffzehrenden Stufe erreicht und gleichsam die Überschussschlammproduktion in der Denitrifikationsstufe gemindert.

In vorrichtungstechnischer Hinsicht wird die zugrunde liegende Aufgabe ausgehend von einer Kläranlage der eingangs beschriebenen Art dadurch gelöst, dass die Denitrifikationsstufe gemäß Anspruch 6 mindestens einen Reaktor mit einer im Becken bzw. Behälter befindlichen Teilfüllung von mit Biomasse besetzbaren und fluidisierbaren Aufwuchsträgerkörpern aufweist. In Abkehr von dem Belebtschlammverfahren ohne Biomassefixierung basiert die erfindungsgemäße Kläranlage auf dem Prinzip einer vorgeschalteten Denitrifikationsstufe mit trägerfixierter Biomasse und produziert daher in reduzierter und in leicht sedimentierender Form anfallende Überschussbiomasse.

Für die Denitrifikationsstufe eignen sich insbesondere fluidisierbare Aufwuchsträgerkörper mit einer Dichte von ungefähr 1 kg/dm³, die einer großen Anzahl mit Hilfe einer Bewegungseinrichtung in dem Abwasser bewegbar sind, so dass eine gute Durchmischung und Versorgung der Biomasse mit den im Abwasser enthaltenden Stoffen gewährleistet ist.

Um die für die Denitrifizierung erforderlichen anoxischen Bedingungen in der Denitrifikationsstufe zu erreichen, wird der Denitrifikation eine sauerstoffzehrende Stufe vorgeschaltet, in welche der aus der Nitrifikationsstufe rezirkulierte Teilstrom einleitbar ist, wobei der die sauerstoffzehrende Stufe verlassende Strom mit entsprechend reduziertem, vorzugsweise nahezu 0 betragendem Sauerstoffgehalt so dann der Denitrifikationsstufe zuführbar ist.

Um einen größeren Biomasseaustrag auch aus der sauerstoffzehrenden Stufe zu verhindern, sollte letztere gleichfalls mindestens einen unterhalb eines Wasserspiegels angeordneten Füllung mit Biomasse besetzbaren Aufwuchsträgerkörper aufweisen. Bevorzugt wird auch hier eine Vielzahl von fluidisierbaren Aufwuchsträgerkörpern mit einer Dichte von ungefähr 1 kg/dm³, die in dem Abwasser mittels einer Bewegungsrichtung bewegbar sind, um eine gute Durchmischung und Nährstoffversorgung der Biomasse zu gewährleisten.

Um eine effiziente Kohienstoffversorgung der Biomasse in dem sauerstoffzehrenden Reaktor sicher zu stellen, ohne eine zusätzliche Kohlenstoffquelle zu verwenden, kann der Zulaufstrom wahlweise einem von zwei Reaktoren zuführbar sein. Beide Reaktoren sind entweder als Denitrifikationsstufe oder sauerstoffzehrende Stufe nutzbar. Entsprechend der gerade gewählten Einleitung des Zulaufstroms entweder in den ersten oder in den zweiten Reaktor, ist auch der Rezirkulationsstrom entweder dem einen oder dem anderen der beiden Reaktoren zuführbar, wobei der Nitrifikationsstufe wahlweise der Ablaufstrom des denitrifizierten Wassers aus einem der beiden Reaktoren zuführbar ist.

Um den Bauaufwand gering zu halten, wird erfindungsgemäß ein Kombinationsreaktor vorgeschlagen, der zwei fluidisch voneinander getrennte Reaktoren aufweist, die beide wechselweise sowohl als Denitrifikationsstufe als auch als sauerstoffzehrende Stufe nutzbar sind. Eine Fördereinrichtung erlaubt es, fluidisierte, mit Biomasse besetzte Aufwuchsträgerkörper von einem Reaktor in den anderen Reaktor und wieder zurück zu fördern. Auf diese Weise können nach dem Umschaltvorgang die Startbedingungen für die sauerstoffzehrende Stufe verbessert werden, da die im jeweiligen Reaktor benötigte Biomasse aus dem jeweils anderen Reaktor überführt wird.

### Ausführungsbeispiele

Das erfindungsgemäße Verfahren wird nachfolgend anhand zweier Ausführungsbeispiele einer Kläranlage, die schematisch in der beigefügten Zeichnung dargestellt sind, näher erläutert.

Es zeigt:
- Figur 1:: Es zeigt: ein hydraulisches Schaltschema einer ersten Ausführungsform einer Kläranlage und
- Figur 2:: ein Schaltschema einer alternativen Ausführungsform mit einem Kombinationsreaktor.

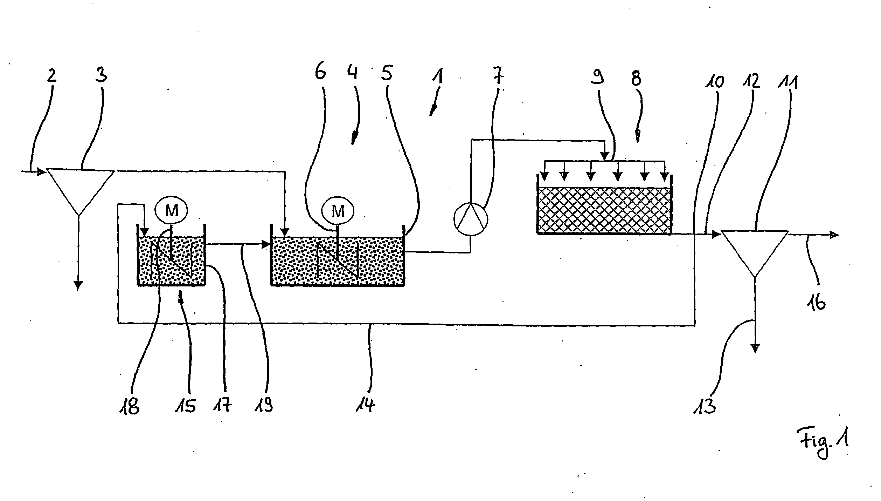

Bei der in Fig. 1 dargestellten Kläranlage 1 wird ein Zulaufstrom 2 des Abwassers zunächst in einer mechanischen Reinigungsstufe 3 weitgehend von Grobstoffen und absetzbaren Stoffen (Sandfang) gereinigt. Sodann wird der vorgereinigte Abwasserstrom einer Denitrifikationsstufe 4 zugeführt. Diese ist in Form eines Reaktors 5 ausgebildet, in dem sich eine Vielzahl von fluidisierten, in der Zeichnung nicht dargestellten Aufwuchsträgerkörpern aus einem Polymermaterial befinden, deren Oberfläche mit einem Biofilm aus Denitrifikanten besetzt ist. Um eine möglichst große Oberfläche zu erhalten, sind die Aufwuchsträgerkörper zerklüftet ausgebildet und ihre Oberfläche beispielsweise mit Rippen, Dornen oder Zacken besetzt, wobei ihre Grundform z.B. ringförmig oder torusförmig sein kann. Um eine gute Berührung sämtlicher Oberflächenbereiche der Aufwuchsträgerkörper mit dem zugeführten, zu denitrifizierenden Abwasser zu erhalten, werden die Aufwuchsträgerkörper mit Hilfe einer Bewegungseinrichtung 6 in Form eines motorgetriebenen Rührwerks umgewälzt, so dass ein Wirbelbettreaktor vorliegt. Die Reaktionsbedingungen in der Denitrifikationsstufe 4 sind anoxisch (bzw. hypoxisch), d.h. Sauerstoff kommt in dem zugeführten Abwasserstrom (und auch in dem rezirkulierten Strom) im Wesentlichen nicht vor, so dass die in dem Denitrifikationsreaktor vorhandene Biomasse im Wesentlichen auf Nitratatmung angewiesen ist.

Der Zulaufstrom 3 enthält nahezu kein Nitrat und auch keinen Sauerstoff. Der Ammoniumgehalt beträgt ca. 40 bis 60 mg/l. Das Abwasser besitzt einen biochemischen Sauerstoffbedarf (BSB₅-Wert) von 200 bis 400 mg/l) sowie einen chemischen Sauerstoffbedarf (CSB-Wert) von 400 bis 800 mg/l. Im Anschluss an die Denitrifikationsstufe 4 wird das Abwasser sodann mit Hilfe einer Pumpe 7 einer als Tropfkörper ausgebildeten Nitrifikationsstufe 8 zugeführt. Sowohl der Nitratgehalt des Wassers am Einlauf des Tropfkörpers als auch der Gehalt an Ammoniumionen ist gegenüber dem Zulauf im Wesentlichen unverändert. Das Abwasser wird oberhalb des Tropfkörpers mit Hilfe einer Verteileinrichtung 9 über den gesamten Querschnitt des Tropfkörpers der Nitrifikationsstufe 8 gleichmäßig ausgebracht und rieselt über den anhaftenden Biomassefilm, der sich auf der gesamten Oberfläche des Tropfkörperaufwuchsträgers ausbildet.

Der Ablaufstrom der Nitrifikationsstufe 8 wird an einer Rohrverzweigung 10 in zwei Teilströme aufgeteilt: Ein erster Teilstrom wird einer kombinierten Nachklär- und Phosphatfällungs-Stufe 11 zugeführt. Die Zugabe von Fällmitteln erfolgt in einen turbulenten Zulauf 12 der Nachklär- und Phosphatfällungs-Stufe 11, in dem eine Sedimentation des ausgeflachten Schlamms stattfindet. Der Überschussschlamm der Kläranlage 1 wird über eine vom Boden der Nachklär- und Phosphatfällungs-Stufe 11 ausgehenden Leitung 13 abgezogen und in eine nicht dargestellte mesophile Faulstufe geführt. Das dort erzeugte Methangas kann zum Betrieb von Gasmotoren dienen, die zum Antrieb von Generatoren herangezogen werden, um den Bedarf der Kläranlage 1 mit elektrischer Energie im Wesentlichen vollständig decken bzw. unter Umständen sogar eine Einspeisung überschüssiger elektrischer Energie in das öffentliche Stromnetz vornehmen zu können. In der als Sedimentationsstufe arbeitenden Nachklär- und Phosphatfällungs-Stufe 11 kann die Wirksamkeit bedarfsweise durch einen Lamellenklärer erhöht werden.

Bei dem zweiten Teilstrom des Ablaufstroms aus der Nitrifikationsstufe 8, handelt es sich um einen Rezirkulationsstrom 14, der einer sauerstoffzehrenden Stufe 15 zugeführt wird. Die sauerstoffzehrende Stufe 15 wird gebildet von einem Reaktor 17, in dem sich eine Vielzahl fluldisierter, mit Biomasse besetzter Aufwuchsträgerkörper befinden. Die Dichte der Aufwuchsträgerkörper entspricht ungefähr der des Wassers und mit Hilfe einer motorbetriebenen Bewegungseinrichtung 18 werden die Aufwuchsträgerkörper in dem unbelüfteten Reaktor 17 gleichmäßig im Sinne eines Wirbelbettreaktors umgewälzt, um einen guten Kontakt der Biomasse mit dem zu behandelnden Rezirkulationswasser zu erreichen. Das rezirkulierte Abwasser weist einen Sauerstoffgehalt von etwa 4 bis 8 mg/l auf. Der Nitratgehalt beträgt üblicherweise ca. 10 bis 20 mg/l und der Ammoniumgehalt noch ca. 1 bis 5 mg/l. Der BSB₅-Wert beträgt ca. 0 bis 15 mg/l und der CSB-Wert ca. 0 bis 90 mg/l.

In der sauerstoffzehrenden Stufe 15 wird der Sauerstoffgehalt des rezirkulierenden Abwassers im weitestgehend abgebaut. Der Sauerstoff des Abwassers reagiert mit den noch vorhandenen Ammoniumionen zu Nitrationen. Bei Weiterleitung des Rezirkulationsstroms über eine Leitung 19 in die Denitrifikationsstufe 4 liegen somit dort die erforderlichen anoxischen Bedingungen vor und die Denitrifikanten können tätig werden. Der Rezirkulationsstrom 14 beträgt typischerweise etwa 200 bis 300 % des Zulaufstroms, er kann bei sehr hoher Stickstoffbelastung des Zulaufstroms aber auch bis zu ca. 400 % des Zulaufstroms betragen. Im Falle eines Mischsystems ist die Rezirkulationsmenge bei starken bzw. anhaltenden Regenereignissen auf die maximale hydraulische Leistung der Kläranlage 1 zu beschränken.

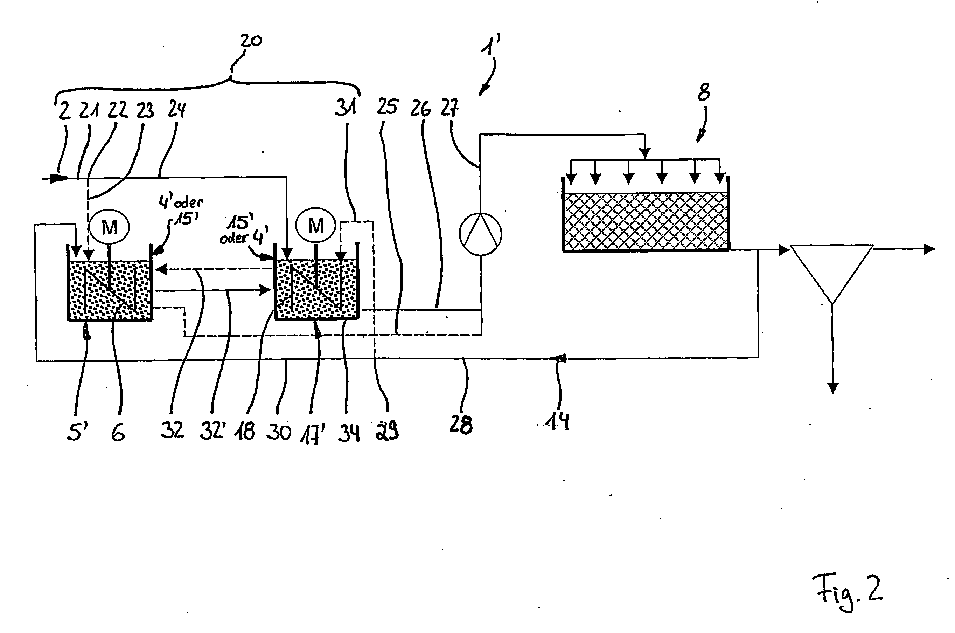

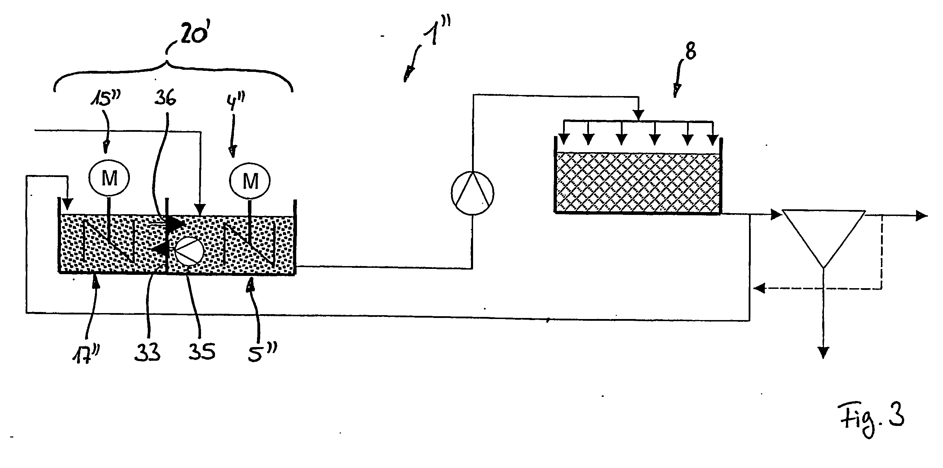

Gemäß der in Fig. 2 dargestellten alternativen Ausführungsform einer Kläranlage 1' sind der als Denitrifikationsstufe 4' dienende Reaktor 5' und der als sauerstoffzehrende Stufe 15' dienende Reaktor 17' zu einem Kombinationsreaktor 20 zusammengefasst. Eine aus der mechanischen Reinigungsstufe kommende Leitung 21 weist eine Verzweigung 22 auf, von der aus eine Zweigleitung 23 zu dem Reaktor 5' und eine weitere Zweigleitung 24 zu dem Reaktor 17' führt.

Eine Ablaufleitung 25 des Reaktors 5' und eine Ablaufleitung 26 des Reaktors 17' vereinigen sich zu einer Leitung 27, die das denitrifizierte Abwasser in Richtung des in Figur 2 nicht dargestellten Reaktors der Nitrifikationsstufe 8 (vgl. Figur 1) führt. Dass von der Nitrifikationsstufe 8 rezirkulierte Abwasser gelangt über eine Leitung 28 zu einer Verzweigung 29, von der sich wiederum zwei Zweigleitungen 30 und 31 als Einläufe bis in die Reaktoren 5' und 17' erstrecken. Der Kombinationsreaktor 20 kann wechselweise in zwei Betriebsarten betrieben werden: Erfolgt der Zulauf des mechanisch vorgereinigten Rohabwassers über die Zweigleitung 23, dient der Reaktor 5' als Denitrifikationsstufe. Die Weiterleitung des denitrifizierten Abwassers in die Nitrifikationsstufe erfolgt über die Ablaufleitung 25 und die Leitung 27. Der aus der Nitrifikationsstufe 8 kommenende Rezirkulationsstrom wird über die Leitungen 28 und 31 in den Reaktor 17' geführt, der als sauerstoffzehrende Stufe dient. Das von Sauerstoff weitestgehend befreite Abwasser wird von dem Reaktor 17' sodann über eine Überströmleitung 32, die die beiden Reaktoren 5' und 17' verbindet, in den der Denitrifikation dienenden Reaktor 5' übergeleitet. Auf diese Weise werden die für die Denitrifikanten benötigten anoxischen Bedingungen hergestellt.

Wird der Zulauf umgeschaltet und das Rohabwasser über die Zweigleitung 24 dem dann der Denitrifikation dienenden Reaktor 17' zugeleitet, erfolgt der Ablauf des denitrifizierten Wassers über die Leitungen 26 und 27 zur Nitrifikationsstufe 8. Der Rezirkulationsstrom wird dann über die Leitungen 28 und 30 in den als sauerstoffzehrende Stufe dienenden Reaktor 5' geleitet, von wo aus eine Versorgung der Denitrifikationsstufe mit nitrifiziertem Wasser über die Überströmleitung 32 erfolgt, die in diesem Fall in die andere Richtung durchströmt wird.

Beide Reaktoren 5', 17' sind mit fluidisierten Aufwuchsträgerkörpern gefüllt, die mit Hilfe von Bewegungseinrichtungen 6 und 18 z.B. in Form von motorbetriebenen Rührwerken umgewälzt werden. Sowohl die Ablaufleitungen 25 und 26 als auch die Überströmleitung 32 sind mit Rückhalteeinrichtungen in Form von Sieben oder Gittern versehen, um ein Abströmen der schwimmenden Aufwuchsträgerkörper aus dem jeweiligen Reaktor 5', 17' zu verhindern.

Es ist aber auch möglich, ohne Umschaltung des Zulaufstroms unter Beibehaltung der Funktion der jeweiligen Reaktoren 5', 17' (oder ausgehend von der Ausführungsform gemäß Figur 1) die Aufwuchsträgerkörper von dem einen Reaktor 5', 17' in den anderen Reaktor 17', 5' zu überführen, insbesondere um zu pumpen. Auf diese Weise können die gut mit Kohlenstoff versorgten Bakterien aus der jeweiligen Denitrifikationsstufe in die mit nur geringen Mengen Kohlenstoff versorgte sauerstoffzehrende Stufe verbracht werden, wodurch insbesondere die Umsatzleistung der sauerstoffzehrenden Bakterien - zumindest temporär - verbessert wird, ohne die Leistung der Denitrifikanten spürbar zu beeinträchtigen. Es kann auch ein stetiger Austausch der Aufwuchsträgerkörper zwischen den beiden Reaktoren 5' und 17' im Sinne einer Kreislaufführung stattfinden, wozu beispielsweise in einer Trennwand 33 zwischen den beiden Reaktoren 5' und 17' im Bereich eines Bodens 34 des Kombinationsreaktors 20 eine weitere Überströmleitung 35 angeordnet sein kann.

### Bezugszeichenilste

- 1, 1': Kläranlage
- 2: Zulaufstrom
- 3: mechanische Reinigungsstufe
- 4, 4': Denitrifikationsstufe
- 5, 5': Reaktor
- 6: Bewegungseinrichtung
- 7: Pumpe
- 8: Nitrifikationsstufe
- 9: Verteileinrichtung
- 10: Verzweigung
- 11: Nachklär- und Phosphatfällungs-Stufe
- 12: Zulauf
- 13: Leitung
- 14: Rezirkulationsstrom
- 15, 15': sauerstoffzehrende Stufe
- 16: Ablaufstrom
- 17, 17': Reaktor
- 18: Bewegungseinrichtung
- 19: Leitung
- 20: Kombinationsreaktor
- 21: Leitung
- 22: Verzweigung
- 23: Zweigleitung
- 24: Zweigleitung
- 25: Ablaufleitung
- 26: Ablaufleitung
- 27: Leitung
- 28: Leitung
- 29: Verzweigung
- 30: Zweigleitung
- 31: Zweigleitung
- 32: Überströmleitung
- 33: Trennwand
- 34: Boden
- 35: Überströmleitung

## Patentansprüche

1. Verfahren zum Betrieb einer Kläranlage (1, 1') zur Reinigung von Abwasser, bei dem
- ein Zulaufstrom (2) des Abwassers, vorzugsweise nach einer vorgeschalteten mechanischen Reinigungsstufe (3), in einer Denitrifikationsstufe (4, 4') denitrizifiert und
- danach in mindestens einer natürlich belüfteten Nitrifikationsstufe (8), vorzugsweise einem Tropfkörper (8) mit auf dessen Aufwuchsträgermaterial anhaftender Biomasse, nitrifiziert wird, und
- ein Teil eines die Nitrifikationsstufe (8) verlassenden Stroms rezirkuliert und zumindest mittelbar wieder der Denitrifikationsstufe (4, 4') zugeführt wird und ein übriger Teil des die Nitrifikationsstufe (8) verlassenden Stroms, vorzugsweise nach einer nachgeschalteten Phosphatfällung und/oder Nachklärung, die Kläranlage (1, 1') als Ablaufstrom (16) verlässt,
**dadurch gekennzeichnet, dass** die Denitrifikation in der Denitrifikationsstufe (4, 4') mittels mindestens einer unterhalb eines Wasserspiegels im Becken angeordneten Teilfüllung aus mit Biomasse besetztem fluidisierbaren Aufwuchsträgermaterial erfolgt, und dess der nach der Nitrifikationsstufe (8) entnommene Rezirkulati onsstrom, dessen Kohlenstoffgehalt gegenüber dem Zulaufstrom (2) des Abwassers deutlich reduziert ist, in eine sauerstoffzehrende Stufe (15, 15') geführt wird, bevor er mit reduziertem Sauerstoffgehalt in die Denitrifikationsstufe (4, 4') geleitet wird.

2. Verfahren nach Anspruch 1, **dadurch gekennzeichnet, dass** in der Denitrifikationsstufe (4, 4') eine Vielzahl von fluidisierten Aufwuchsträgerkörpern mit einer Dichte von ungefähr 1 kg/dm³ in dem Abwasser mittels mindestens einer Bewegungseinrichtung (6, 18) bewegt wird.

3. Verfahren nach Anspruch 1 oder 2, **dadurch gekennzeichnet, dass** die Sauerstoffzehrung mittels mindestens einer unterhalb eines Wasserspiegels in einem Becken oder einem Behälter der sauerstoffzehrenden Stufe angeordneten fluidisierbaren Aufwuchsträger-Materialfüllung mit daran anhaftender Biomasse erfolgt.

4. Verfahren nach Anspruch 3, **dadurch gekennzeichnet, dass** in der sauerstoffzehrenden Stufe (15, 15') eine Vielzahl von fluidisierbaren BiomasseAufwuchsträgerkörpern in dem Abwasser mittels mindestens einer Bewegungseinrichtung (6, 18) bewegt wird.

5. Verfahren nach einem der Ansprüche 2 bis 4, **dadurch gekennzeichnet, dass** der Zulaufstrom (2) während eines Zeitraums in einen während der übrigen Zeit als sauerstoffzehrende Stufe (15') dienenden Reaktor (5', 17') geleitet und dort denitrifiziert wird, von wo aus er der Nitrifikationsstufe (8) zugeführt wird, wobei der Rezirkulationsstrom während dieses Zeitraums in einen während der übrigen Zeit als Denitrifikationsstufe (4') dienenden Reaktor (17', 5') geleitet und dort der Sauerstoffgehalt reduziert wird, von wo aus er dem ersten Reaktor (5', 17') zugeführt und dort denitrifiziert wird.

6. Kläranlage (1, 1') zur Reinigung von Abwasser, mit
- einer Denitrifikationsstufe (4, 4'), in die ein Zulaufstrom (2) des Abwassers, vorzugsweise nach einer vorgeschalteten mechanischen Reinigungsstufe (3), einleitbar ist,
- einer der Denitrifikationsstufe (4, 4') nachgeschaltete Nitrifikationsstufe (8), in der eine Mischung aus vorgereinigtem, Ammonium haltigen und denitrifiziertem Abwasser nitrifizierbar ist, wobei die Nitrifikationsstufe (8) aus mindestens einer mit Biomasse bewachsenen natürlich belüfteten Verfahrensstufe, vorzugsweise einem Tropfkörper, besteht, und
- einer Rezickulationsleitung, mit der ein Teil des die Nitrifikationsstufe (8) verlassenden Stroms rezirkulierbar und zumindest mittelbar wieder der Denitrifikationsstufe (4, 4') zuführbar ist, wobei ein übriger Teil des die Nitrifikationsstufe verlassenden Stroms als Ablaufstrom (16) aus der Kläranlage (1, 1') ausleitbar ist, wobei der Ablaufstrom (16) vor der Ausleitung vorzugsweise in einer nachgeschalteten Nachklärstufe und/oder Phosphatfällungsstufe (11) nachbehandelbar ist, **dadurch gekennzeichnet, dass** die Denitrifikationsstufe (4, 4') mindestens eine unterhalb eines Wasserspiegels in einem Becken befindliche Teilfüllung aus mit Biomasse besetzbaren fluidisierbaren Aufwuchsträgerkörpern aufweist und dass die Kläranlage (1, 1') eine sauerstoffzehrende Stufe (15, 15') aufweist, in die der aus einem Ablauf der Nitrifikationsstufe (8) rezirkulierbare Teilstrom, dessen Kohlenstoffgehalt gegenüber dem Zulaufstrom (2) des Abwassers deutlich reduziert ist, einleitbar ist, wobei der die sauerstoffzehrende Stufe (15, 15') verlassende Abwasserstrom der Denitrifikationsstufe (4, 4') zuführbar ist.

7. Kläranlage nach Anspruch 6, **dadurch gekennzeichnet, dass** die Denitrifikationsstufe (4, 4') eine Vielzahl von fluidisierbaren Aufwuchsträgerkörpern mit einer Dichte von ungefähr 1 kg/dm³ aufweist, die in dem Abwasser mittels einer Bewegungseinrichtung (6, 18) bewegbar sind.

8. Kläranlage nach Anspruch 6 oder 7, **dadurch gekennzeichnet, dass** die sauerstoffzehrende Stufe (15, 15') mindestens eine unterhalb eines Wasserspiegels im Becken angeordnete und mit Biomasse besetzbaren Teilfüllung von fluidisierbaren Aufwuchsträgern aufweist.

9. Kläranlage nach einem der Ansprüche 6 bis 8, **dadurch gekennzeichnet, dass** die sauerstoffzehrende Stufe (15, 15') eine Vielzahl von fluidisierbaren Aufwuchsträgerkörper mit einer Materialdichte von ungefähr 1 kg pro dm³ aufweist, die in dem Abwasser mittels einer Bewegungsrichtung (6, 18) bewegbar sind.

10. Kläranlage nach einem der Ansprüche 6 bis 9, **dadurch gekennzeichnet, dass** der Zulaufstrom (2) wahlweise einem von zwei Reaktoren (5', 17') zuführbar ist, von denen jeder entweder als De nitrifikationsstufe (4') oder als sauerstoffzehrende Stufe (15) nutzbar ist, und dass der Rezirkulationsstrom (14) wahlweise den jeweils anderen der beiden Reaktoren (17', 5') zuführbar ist, wobei der Nitrifikationsstufe (8) wahlweise ein Strom des denitrifizierten Abwassers aus einem der beiden Reaktoren (5', 17') zuführbar ist.

11. Kläranlage nach Anspruch 10, **gekennzeichnet durch** einen Kombinationsreaktor (20), der zwei fluidisch voneinander getrennte Reaktoren (5', 17') aufweist, von denen jeder wechselweise sowohl als Denitrifikationsstufe (4') als auch als sauerstoffzehrende Stufe (15'; nutzbar ist, sowie **durch** eine Fördereinrichtung, mit die fluidisierten Aufwuchsträgerkörper von einem Reaktor (5', 17') in den anderen Reaktor (17', 5') und wieder zurück förderbar sind.

## Claims

1. A method for operating a waste water treatment plant (1, 1') for cleaning waste water, in which
- a feed stream (2) of the waste water is denitrified in a denitrification stage (4, 4'), preferably after an upstream mechanical cleaning stage (3), and
- subsequently nitrified in at least one naturally ventilated nitrification stage (8), preferably a trickling filter (8) having biomass adhering to the aufwuchs carrier material thereof, and
- some of a stream exiting the nitrification stage (8) is recirculated and fed at least indirectly back to the denitrification stage (4, 4'), and
- a remaining part of the stream exiting the nitrification stage (8) exits the waste water treatment plant (1, 1') as a discharge stream (16), preferably after a downstream phosphate precipitation stage and/or final sedimentation stage,
**characterised in that**
the denitrification takes place in the denitrification stage (4, 4') by means of at least one partial filling, which is arranged below a water level of the tank and consists of fluidisable aufwuchs carrier material on which biomass grows, and that the recirculation stream taken after the nitrification stage (8), the carbon content of which is greatly reduced compared to the feed stream (2) of the waste water, is conducted to an oxygen-consuming stage (15, 15') before it is conducted with a reduced oxygen content to the denitrification stage (4, 4').

2. The method according to Claim 1,
**characterised in that**
in the denitrification stage (4, 4'), a multiplicity of fluidised aufwuchs carrier bodies having a density of approximately 1 kg/dm³ is moved in the waste water by means of at least one movement device (6, 18).

3. The method according to Claim 1 or 2,
**characterised in that**
the oxygen consumption takes place by means of at least one fluidisable aufwuchs carrier material filling, which is arranged below a water level in a tank or container of the oxygen-consuming stage and has biomass adhering thereto.

4. The method according to Claim 3,
**characterised in that**
in the oxygen-consuming stage (15, 15'), a multiplicity of fluidisable biomass aufwuchs carrier bodies is moved in the waste water by means of at least one movement device (6, 18).

5. The method according to any one of Claims 2 to 4,
**characterised in that**
the feed stream (2) is conducted during a time period into a reactor (5', 17'), which acts as an oxygen-consuming stage (15') for the rest of the time, and is denitrified there, from where it is fed to the nitrification stage (8), wherein the recirculation stream is conducted during this period into a reactor (17', 5'), which acts as a denitrification stage (4') for the rest of the time, and the oxygen content is reduced there, from where it is fed to the first reactor (5', 17') and denitrified there.

6. A waste water plant (1, 1') for cleaning waste water, having
- a denitrification stage (4, 4'), into which a feed stream (2) of the waste water can be conducted, preferably after an upstream mechanical cleaning stage (3),
- a nitrification stage (8) downstream of the denitrification stage (4, 4'), in which nitrification stage a mixture of pre-cleaned, ammonium-containing and denitrified waste water can be nitrified, wherein the nitrification stage (8) consists of at least one naturally ventilated process stage, preferably a trickling filter, on which biomass grows, and
- a recirculation line, with which some of the stream exiting the nitrification stage (8) can be recirculated and fed at least indirectly back to the denitrification stage (4, 4'), wherein a remaining part of the stream exiting the nitrification stage can be conducted out of the waste water treatment plant (1, 1') as a discharge stream (16), wherein the discharge stream (16) can be post-treated before being discharged, preferably in a downstream final sedimentation stage and/or phosphate precipitation stage (11),
**characterised in that**
the denitrification stage (4, 4') has at least one partial filling, which is situated below a water level in a tank and consists of fluidisable aufwuchs carrier bodies on which biomass can grow, and that the waste water treatment plant (1, 1') has an oxygen-consuming stage (15, 15'), into which the partial stream that can be recirculated from a discharge of the nitrification stage (8) can be conducted, the carbon content of which part stream is greatly reduced compared to the feed stream (2) of the waste water, wherein the waste water stream exiting the oxygen-consuming stage (15, 15') can be fed to the denitrification stage (4, 4').

7. The waste water treatment plant according to Claim 6,
**characterised in that**
the denitrification stage (4, 4') has a multiplicity of fluidisable aufwuchs carrier bodies having a density of approximately 1 kg/dm³, which can be moved in the waste water by means of a movement device (6, 18).

8. The waste water treatment plant according to Claim 6 or 7,
**characterised in that**
the oxygen-consuming stage (15, 15') has at least one partial filling of fluidisable aufwuchs carriers, which is arranged below a water level in the tank and on which biomass can grow.

9. The waste water treatment plant according to any one of Claims 6 to 8,
**characterised in that**
the oxygen-consuming stage (15, 15') has a multiplicity of fluidisable aufwuchs carrier bodies having a material density of approximately 1 kg per dm³, which can be moved in the waste water by means of a movement device (6, 18).

10. The waste water treatment plant according to any one of Claims 6 to 9,
**characterised in that**
the feed stream (2) can be fed to either of two reactors (5', 17'), of which each can be used either as a denitrification stage (4') or as an oxygen-consuming stage (15'), and that the recirculation stream (14) can be fed to the respective other of the two reactors (17', 5'), wherein a stream of the denitrified waste water from one of the two reactors (5', 17') can be fed to the nitrification stage (8).

11. The waste water treatment plant according to Claim 10,
**characterised by**
a combination reactor (20), which has two fluidically separate reactors (5', 17'), of which each can be used alternately as a denitrification stage (4') and as an oxygen-consuming stage (15'), and by a conveying device, with which fluidised aufwuchs carrier bodies can be conveyed from one reactor (5', 17') into the other reactor (17', 5') and back.

## Revendications

1. Procédé pour le fonctionnement d'une station d'épuration (1, 1') pour le nettoyage d'eaux usées, dans lequel
- un courant d'alimentation (2) de l'eau usée dénitrifie dans un niveau de dénitrification (4, 4'), de préférence en aval d'un niveau de nettoyage mécanique (3) préalable, et
- une nitrification a ensuite lieu dans au moins un niveau de nitrification naturellement aéré (8), de préférence dans un corps de percolation (8) avec une biomasse adhérant au matériau support de croissance, et
- une partie d'un flux quittant le niveau de nitrification (8) recircule et rejoint au moins indirectement le niveau de dénitrification (4, 4'), et
- une partie restante du flux quittant le niveau de nitrification (8) quitte la station d'épuration (1, 1') en tant que courant de sortie (16), de préférence en amont d'une précipitation de phosphates consécutive et/ou d'une décantation secondaire,
**caractérisé en ce que** la dénitrification dans le niveau de dénitrification (4, 4') est réalisée au moyen d'au moins un remplissage partiel à partir de matériau de support de croissance fluidisable couvert de biomasse, agencé en-dessous d'un niveau d'eau dans le bassin, et **en ce que** le courant de recirculation récupéré après le niveau de nitrification (8), dont la teneur en carbone est nettement réduite par rapport au courant d'alimentation (2) de l'eau usée, est guidé vers un niveau consommateur d'oxygène (15, 15'), avant d'être alimenté vers le niveau de dénitrification (4, 4') avec une teneur en oxygène réduite.

2. Procédé selon la revendication 1, **caractérisé en ce que** dans le niveau de dénitrification (4, 4'), une multitude de corps de support de croissance fuidisés, avec une densité d'environ 1 kg/dm³, sont déplacés dans l'eau usée au moyen d'au moins un dispositif de déplacement (6, 18).

3. Procédé selon la revendication 1 ou 2, **caractérisé en ce que** la consommation d'oxygène est effectuée au moyen d'au moins un remplissage de matériau de support de croissance fluidisable couvert de biomasse, agencé en-dessous d'un niveau d'eau dans un bassin ou dans un récipient du niveau consommateur d'oxygène.

4. Procédé selon la revendication 3, **caractérisé en ce que** dans le niveau consommateur d'oxygène (15, 15'), une multitude de corps de matériau de support de croissance fluidisables est déplacée dans l'eau usée au moyen d'au moins un dispositif de déplacement (6, 18).

5. Procédé selon l'une des revendications 2 à 4, **caractérisé en ce que** le courant d'alimentation (2) est guidé pendant un certain temps vers un réacteur (5', 17') servant de niveau consommateur d'oxygène (15') le reste du temps, où il est dénitrifié, à partir d'où il est alimenté vers le niveau de nitrification (8), le courant de recirculation étant pendant ce temps guidé vers un réacteur (17', 5') servant de niveau de dénitrification (4') le reste du temps, où la teneur en oxygène est réduite, à partir d'où il est alimenté vers le premier réacteur (5', 17') pour y être dénitrifié.

6. Station d'épuration (1, 1') pour le nettoyage d'eaux usées, avec
- un niveau de dénitrification (4, 4') dans lequel un courant d'alimentation (2) d'eau usée peut être amené, de préférence en aval d'un niveau de nettoyage mécanique (3),
- un niveau de nitrification (8) installé à la suite du niveau de dénitrification (4, 4'), dans lequel une eau usée dénitrifiée contenant de l'ammonium est nitrifiée, le niveau de nitrification (8) étant constitué d'au moins un niveau de procédé naturellement aéré, recouvert de biomasse, de préférence un corps de percolation, et
- une conduite de recirculation, avec laquelle une partie du courant quittant le niveau de nitrification (8) peut être remise en circulation et renvoyée au moins indirectement vers le niveau de dénitrification (4, 4'), une partie restante du courant quittant le niveau de nitrification pouvant être évacuée de la station d'épuration (1, 1') en tant que courant de sortie (16), le courant de sortie (16) pouvant de préférence être traité postérieurement avant l'évacuation, de préférence dans un niveau de décantation secondaire installé en aval et/ou un niveau de précipitation de phosphates (11), **caractérisé en ce que** le niveau de dénitrification (4, 4') comporte au moins un remplissage partiel constitué de corps de support de croissance fluidisables susceptibles d'être couverts de biomasse, disposé en-dessous d'un niveau d'eau dans le bassin, et **en ce que** la station d'épuration (1, 1') comporte un niveau consommateur d'oxygène (15, 15'), vers lequel peut être guidé le courant partiel susceptible de recirculer à partir d'une sortie du niveau de nitrification (8), dont la teneur en carbone est nettement réduite par rapport au courant d'alimentation (2) d'eau usée, sachant que le courant d'eau usée quittant le niveau consommateur d'oxygène (15, 15') peut être amené vers le niveau de dénitrification (4, 4').

7. Station d'épuration selon la revendication 6, **caractérisée en ce que** le niveau de dénitrification (4, 4') **caractérisé en ce que** dans le niveau de dénitrification (4, 4') comporte une multitude de corps de support de croissance fluidisables, avec une densité d'environ 1 kg/dm³, lesquels sont déplacés dans l'eau usée au moyen d'au moins un dispositif de déplacement (6, 18).

8. Station d'épuration selon la revendication 6, **caractérisée en ce que** le niveau consommateur d'oxygène (15, 15') comporte au moins un remplissage partiel de supports de croissance fluidisables, susceptible d'être recouvert de biomasse et agencé en-dessous du niveau d'eau dans le bassin.

9. Station d'épuration selon l'une des revendications 6 à 8, **caractérisée en ce que** le niveau consommateur d'oxygène (15, 15') comporte une multitude de corps de support de croissance fluidisables, avec une densité d'environ 1 kg/dm³, lesquels sont déplacés dans l'eau usée au moyen d'au moins un dispositif de déplacement (6, 18).

10. Station d'épuration selon l'une des revendications 6 à 9, **caractérisée en ce que** le courant d'alimentation (2) peut être guidé au choix vers l'un de deux réacteurs (5', 17'), parmi lesquels chacun peut être utilisé soit comme niveau de dénitrification (4'), soit comme niveau consommateur d'oxygène (15), et **en ce que** le courant de recirculation (14) peut être guidé au choix respectivement vers l'autre des deux réacteurs (17', 5'), sachant qu'un courant d'eau usée dénitrifiée venant de l'un des deux réacteurs (5', 17') peut être guidé au choix vers le niveau de nitrification (8).

11. Station d'épuration selon la revendication 10, **caractérisée par** un réacteur combiné (20) comportant deux réacteurs (5', 17') fluidiquement séparés l'un de l'autre, parmi lesquels chacun peut être utilisé alternativement aussi bien comme niveau de dénitrification (4') que comme niveau consommateur d'oxygène (15'), ainsi que par un dispositif de déplacement, avec lequel les corps de support de croissance fluidisés peuvent être déplacés d'un réacteur (5', 17') vers l'autre réacteur (17', 5') et inversement.
